# EUROPEAN PATENT APPLICATION

(11) **EP 4 831 848 A1**
(43) Date of publication of application: **28.10.2026**
(21) Application number: 25211032.5
(22) Date of filing: 24.10.2025
(51) Int. Cl.: G06F 21/56, G06F 21/57

(54) **METHOD AND SYSTEM FOR DETECTING SMART CONTRACT STATE MANIPULATION ATTACK BASED ON GRAPH NEURAL NETWORK, DEVICE, AND MEDIUM**

(30) Priority: 25.04.2025 CN 202510529357
(71) Applicant: Yunnan Power Grid Co., Ltd., Kunming, Yunnan 675000 (CN)
(72) Inventor: Zhao, Yitao, Kunming, 675000 (CN); Wu, Hao, Kunming, 675000 (CN); Dong, Linlin, Kunming, 675000 (CN); Shen, Xin, Kunming, 675000 (CN); Lin, Cong, Kunming, 675000 (CN); Liu, Qingchan, Kunming, 675000 (CN); Yin, Yujun, Kunming, 675000 (CN); He, Zhaolei, Kunming, 675000 (CN); Li, Jiahao, Kunming, 675000 (CN)
(74) Representative: Meyer-Dulheuer MD Legal Patentanwälte PartG mbB

(57) **Abstract**

Provided are a method and a system for detecting a smart contract state manipulation attack based on a graph neural network, a device, and a medium, belonging to the technical field of blockchain security analysis. The method includes: defining the type of the smart contract state manipulation attack, collecting attack smart contracts and normal smart contracts on a blockchain, and constructing a training data set; positioning a creator of a target smart contract, and constructing a historical external transaction graph; decompiling the target smart contract, and constructing an external call behavior graph; combining the historical external transaction graph with the external call behavior graph, and constructing a creation behavior graph of a smart contract; constructing a classifier of a state manipulation attack; and monitoring a smart contract created in real time, constructing the creation behavior graph, and inputting the creation behavior graph into the classifier to detect the state manipulation attack in real time. Blockchain nodes can be connected, a newly deployed smart contract is acquired in real time, the creation behavior graph of the smart contract is constructed, and the creation behavior graph is input into a graph classification model to detect a state manipulation attack smart contract.

## Description

### TECHNICAL FIELD

The present disclosure relates to the technical field of blockchain security analysis, and in particular, to a method and a system for detecting a smart contract state manipulation attack based on a graph neural network, a device, and a medium.

### BACKGROUND

Since the launch of Ethereum, which is a blockchain platform based on an account model, the application field of a blockchain smart contract has expanded to numerous fields such as smart finance, smart medical care, and supply chain management. Blockchain transactions mainly show the characteristics and advantages of decentralization and high anonymity. The existing digital currency lacks feasible regulatory solutions. In the past two years, there have been hundreds of attack events on blockchains due to smart contract vulnerabilities, resulting in the loss of billions of digital assets.

Due to the variable attack methods on smart contracts, most of the existing security research on blockchain smart contracts can only focus on a specific class of attacks, and the research on the corresponding detection and defense technology has certain limitations and poor practicality. At the same time, most of the current security research focuses on the code audit before the smart contract is deployed and the transaction tracking after the smart contract is attacked. There is a lack of effective methods for real-time monitoring of malicious attacks.

The attack events that occurred in the blockchain ecology in the past are summarized. The call sequence relationship between an attack smart contract of an attacker and a business smart contract of a victim project is emphatically analyzed. A class of smart contract state manipulation attacks are defined. At the same time, it is found that the attacker may deploy the attack contract in advance before launching the attack, and then make a corresponding attack call by calling an attack function of the attack contract. There is a certain time lag between the deployment of the attack smart contract and the occurrence of the attack. Therefore, the blockchain can be monitored in real time. The smart contract state manipulation attack behavior can be detected in advance before the attack occurs after the deployment of the malicious smart contract, so as to give an early warning.

The present disclosure defines a class of smart contract state manipulation attacks based on the existing smart contract attack events. First, the bytecodes of attack smart contracts and the bytecodes of normal smart contracts are collected. The bytecodes of smart contracts are decompiled. The contract creation behavior graph is constructed by using the call behavior of smart contracts and the historical transaction information of a contract creator. A graph classification model is trained by using a graph neural network. Then, the trained graph classification model is used to monitor the smart contracts on the chain in real time, so as to achieve the classification detection of state manipulation attack smart contracts and effectively prevent the smart contract state manipulation attack.

### SUMMARY

In view of the above problems, the present disclosure has been made.

Therefore, the technical problem to be solved by the present disclosure is how to solve the problems that most of the existing security research on blockchain smart contracts can only focus on a specific class of attacks, and the research on the corresponding detection and defense technology has certain limitations and poor practicality.

In order to solve the above technical problems, the present disclosure provides the following technical solution: a method for detecting a smart contract state manipulation attack based on a graph neural network, including the following steps: defining the type of the smart contract state manipulation attack, collecting attack smart contracts and normal smart contracts on a blockchain, and constructing a training data set; positioning a creator of a target smart contract, acquiring transaction call information on the day before a contract is created, and constructing a historical external transaction graph; decompiling the target smart contract, recursively extracting an external call relationship, and constructing an external call behavior graph; combining the historical external transaction graph with the external call behavior graph, merging repeated nodes, and constructing a creation behavior graph of a smart contract; inputting the creation behavior graph into a graph attention neural network model for training, and constructing a classifier of a state manipulation attack; and monitoring a smart contract created in real time, constructing the creation behavior graph, and inputting the creation behavior graph into the classifier to detect the state manipulation attack in real time.

As a preferred solution of the method for detecting the smart contract state manipulation attack based on the graph neural network according to the present disclosure, the smart contract state manipulation attack includes an attacker first calling a function in a victim contract to affect the state of key variables in the victim contract, and then the attacker calling a victim function which has defects because the state has not been recovered when the victim contract state has not been recovered.

As a preferred solution of the method for detecting the smart contract state manipulation attack based on the graph neural network according to the present disclosure, the step of acquiring transaction call information on the day before a contract is created and constructing a historical external transaction graph includes: using an Application Programming Interface (API) of a blockchain browser to acquire all the transaction information of a smart contract creator on the day before the smart contract is created; processing the transaction information, and judging a transaction type according to a function signature in each transaction, in which the transaction is a transfer transaction if the function signature is empty, the transaction is a contract creation transaction if the function signature is the function signature of a smart contract creation transaction in a preset database, and other transactions are contract function call transactions; if the transaction is a transfer transaction or a smart contract creation transaction, taking a caller address and a callee address as a starting point and an ending point of an edge in the graph; and if the transaction is a contract function call transaction, taking a caller address and a callee address in the transaction information as a starting point and an ending point of the transaction, and taking the transaction information as the edge, constructing the historical external transaction graph of the smart contract creator.

As a preferred solution of the method for detecting the smart contract state manipulation attack based on the graph neural network according to the present disclosure, the step of decompiling the target smart contract, recursively extracting an external call relationship, and constructing an external call behavior graph includes: decompiling the smart contract to acquire an opcode sequence of the smart contract, hooking a function call opcode in the opcode sequence, and deeply traversing functions with common attributes in the smart contract; if there is an external contract call in the function, recovering an external call contract address and a called function signature; acquiring a bytecode of a called contract through a call interface of a web3 library, and recursively performing external call analysis; and taking a contract address and a corresponding function signature as nodes of a call graph, and taking a call behavior as an edge, constructing the external call behavior graph of the smart contract.

As a preferred solution of the method for detecting the smart contract state manipulation attack based on the graph neural network according to the present disclosure, the step of constructing a creation behavior graph of a smart contract includes: combining the historical external transaction graph of the smart contract creator with the external call behavior graph of the smart contract, inducing and merging repeated nodes, and constructing the creation behavior graph of the smart contract.

As a preferred solution of the method for detecting the smart contract state manipulation attack based on the graph neural network according to the present disclosure, the step of inputting the creation behavior graph into a graph attention neural network model for training, and constructing a classifier of a state manipulation attack includes: taking the creation behavior graph of the smart contract as an input, constructing a graph neural network based on a graph attention mechanism, and using a rectified linear unit as an activation function, in which a feature aggregation formula of node i is expressed as: $\vec{{h}_{i}} ′ = σ \left({\sum }_{j ∈ {N}_{i}} {α}_{i , j} W \vec{{h}_{j}}\right)$ where h̅ᵢ̅' denotes a feature vector of the aggregated node i, σ denotes an activation function, Nᵢ denotes an adjacent node of the node i, α_{i,j} denotes an attention coefficient of a self-attention mechanism between the node i and the node j, and W denotes a learning weight matrix; obtaining the feature representation of the graph by aggregating node features using an average pooling method, which is: $M = Mean \left({\sum }_{k ∈ N} \vec{{h}_{k}}\right)$ where M denotes a graph feature after average pooling aggregation, N denotes all nodes in the graph, and h̅ₖ̅ denotes the feature representation of node k; and outputting the global feature representation of the graph to a dropout layer and a fully connected layer to obtain a prediction class label of the graph.

As a preferred solution of the method for detecting the smart contract state manipulation attack based on the graph neural network according to the present disclosure, the step of monitoring a smart contract created in real time, constructing the creation behavior graph, and inputting the creation behavior graph into the classifier to detect the state manipulation attack in real time includes: monitoring the created smart contract in real time through a remote procedure call, and saving the bytecode of the smart contract; constructing a creation behavior graph of the smart contract; and inputting the creation behavior graph of the smart contract into the classifier to detect a corresponding smart contract state manipulation attack.

Another objective of the present disclosure is to provide a system for detecting a smart contract state manipulation attack based on a graph neural network.

In order to solve the above technical problems, the present disclosure provides the following technical solution: a system for detecting a smart contract state manipulation attack based on a graph neural network, where the system includes a data set construction module, a historical external transaction graph construction module, an external call behavior graph construction module, a creation behavior graph construction module, a classifier construction module, and a real-time detection module; the data set construction module is configured to define the type of the smart contract state manipulation attack, collect attack smart contracts and normal smart contracts on a blockchain, and construct a training data set; the historical external transaction graph construction module is configured to position a creator of a target smart contract, acquire transaction call information on the day before a contract is created, and construct a historical external transaction graph; the external call behavior graph construction module is configured to decompile the target smart contract, recursively extract an external call relationship, and construct an external call behavior graph; the creation behavior graph construction module is configured to combine the historical external transaction graph with the external call behavior graph, merge repeated nodes, and construct a creation behavior graph of a smart contract; the classifier construction module is configured to input the creation behavior graph into a graph attention neural network model for training, and construct a classifier of a state manipulation attack; and the real-time detection module is configured to monitor a smart contract created in real time, construct the creation behavior graph, and input the creation behavior graph into the classifier to detect the state manipulation attack in real time.

The present disclosure provides a computer device, including a memory and a processor, where the memory stores a computer program, and the processor, when executing the computer program, implements the steps of the method for detecting the smart contract state manipulation attack based on the graph neural network.

The present disclosure provides a computer-readable storage medium on which a computer program is stored, where the computer program, when executed by a processor, implements the steps of the method for detecting the smart contract state manipulation attack based on the graph neural network.

The present disclosure has the following beneficial effect. The present disclosure proposes to construct a creation behavior graph of a smart contract, which contains the historical transaction information of the smart contract creator and the call behavior information of the smart contract. The combination of the historical transaction information and the call behavior information can better characterize the historical behavior of the contract creator and the intention of the smart contract. If the smart contract is a malicious state manipulation contract, the historical behavior of the contract creator is different from the normal account, such as transferring funds to and from a plurality of anonymous accounts, while the smart contract may call a flash loan function to manipulate corresponding prices and data.

In the present disclosure, the graph neural network is used to detect a state manipulation attack smart contract, and the behavior graph of the smart contract is input as a graph. In graph embedding learning, the graph attention network is selected as a component of the graph neural network, which performs feature aggregation based on a self-attention mechanism. The weights between nodes are calculated through a learnable weight matrix, so that each node can be weighted and aggregated according to the features of its surrounding nodes. Finally, the feature representation of the graph is obtained by aggregating node features using an average pooling method, which is output to a dropout layer and a fully connected layer to obtain the label of the graph, that is, the state manipulation malicious attack contract or the normal contract.

Through a remote procedure call interface of a blockchain node, the present disclosure monitors a block in real time, traverses transactions in the block, retrieves smart contract creation transactions therein, analyzes the bytecode of the smart contract, constructs the creation behavior graph, and inputs the creation behavior graph into the trained graph classification model to detect malicious state manipulation attacks.

### BRIEF DESCRIPTION OF THE DRAWINGS

In order to explain the technical solution of the embodiment of the present disclosure more clearly, the drawings needed in the description of the embodiment will be briefly introduced below. Obviously, the drawings in the following description are only some embodiments of the present disclosure. For those skilled in the art, other drawings can be obtained according to these drawings without paying creative labor.
FIG. 1 is an overall flow chart of a method for detecting a smart contract state manipulation attack based on a graph neural network according to an embodiment of the present disclosure.
FIG. 2 is a diagram of a structure of a graph attention neural network model for achieving graph classification of a method for detecting a smart contract state manipulation attack based on a graph neural network according to an embodiment of the present disclosure.
FIG. 3 is an example diagram of a creation behavior graph of a smart contract of a method for detecting a smart contract state manipulation attack based on a graph neural network according to an embodiment of the present disclosure.
FIG. 4 is a module diagram of a system solution of a system for detecting a smart contract state manipulation attack based on a graph neural network according to an embodiment of the present disclosure.

### DETAILED DESCRIPTION OF THE EMBODIMENTS

In order to make the above objectives, features and advantages of the present disclosure more obvious and understandable, the detailed description of the present disclosure will be described in detail with reference to the drawings in the specification. Obviously, the described embodiments are some of the embodiments of the present disclosure, rather than all of the embodiments. Based on the embodiments in the present disclosure, all other embodiments obtained by those skilled in the art without paying creative labor should belong to the scope of protection of the present disclosure.

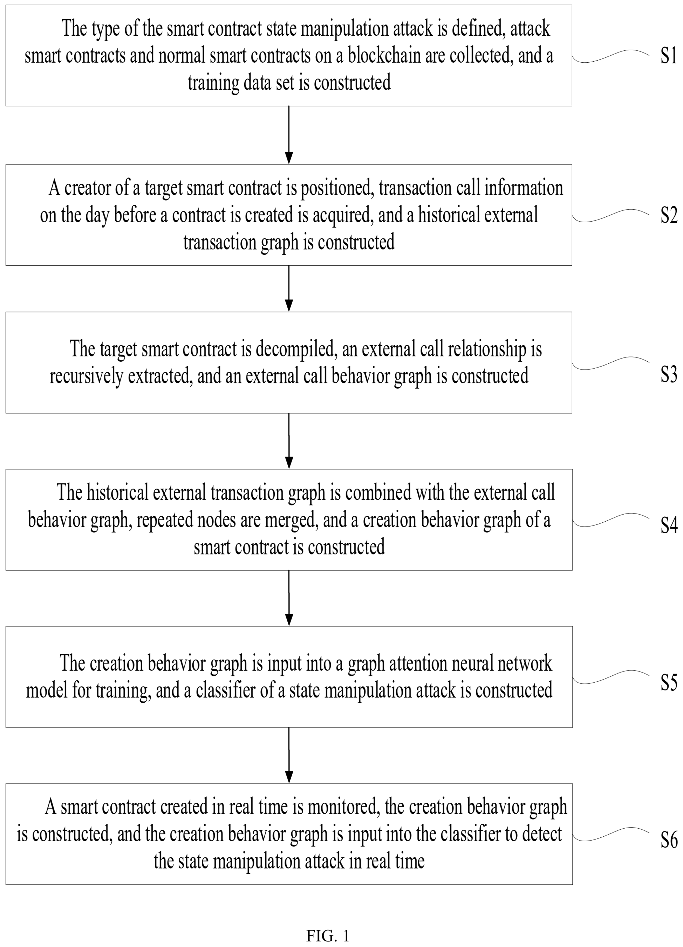

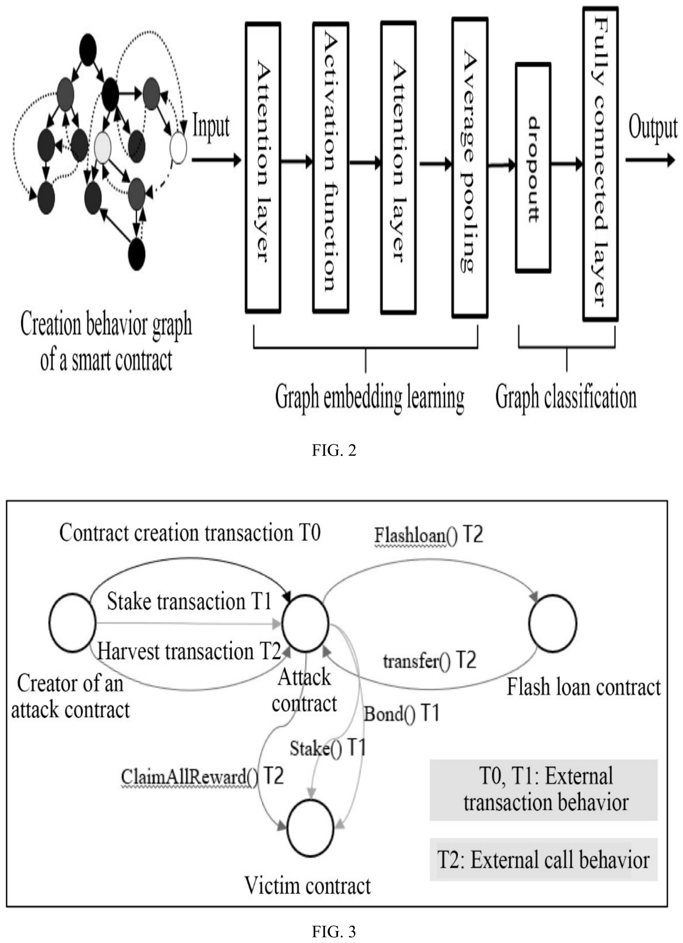

With reference to FIG. 1 and FIG. 2, Embodiment 1 is a first embodiment of the present disclosure. This embodiment provides a method for detecting a smart contract state manipulation attack based on a graph neural network, including: defining the type of the smart contract state manipulation attack, collecting attack smart contracts and normal smart contracts on a blockchain, and constructing a training data set; positioning a creator of a target smart contract, acquiring transaction call information on the day before a contract is created, and constructing a historical external transaction graph; decompiling the target smart contract, recursively extracting an external call relationship, and constructing an external call behavior graph; combining the historical external transaction graph with the external call behavior graph, merging repeated nodes, and constructing a creation behavior graph of a smart contract; inputting the creation behavior graph into a graph attention neural network model for training, and constructing a classifier of a state manipulation attack; and monitoring a smart contract created in real time, constructing the creation behavior graph, and inputting the creation behavior graph into the classifier to detect the state manipulation attack in real time.

S1, the type of the smart contract state manipulation attack is defined, attack smart contracts and normal smart contracts on a blockchain are collected, and a training data set is constructed.

A class of smart contract state manipulation attacks are defined, and the existing attack smart contracts and normal smart contracts on the blockchain are collected as a data set. In order to ensure that the number of attack smart contracts and normal smart contracts is in an order of magnitude, division is performed according to the number of blocks on the blockchain, and a certain number of normal smart contracts are randomly sampled in each block layer as a data set, thereby ensuring that the number of normal smart contracts after sampling is performed is about 10,000.

The smart contract state manipulation attack includes an attacker first calling a function in a victim contract which may affect the state of key variables in the victim contract, and the attacker calling a victim function which has defects because the state of key variables has not been recovered when the victim contract state has not been recovered. A typical reentry attack and a price manipulation attack both belong to a state manipulation attack.

Specifically, the existing smart contract security events are summarized, and a class of smart contract state manipulation attacks are defined. An attacker first calls a function in a victim contract which may affect the state of key variables in the victim contract. The attacker may call some victim functions in the victim contract that have security threats because the smart contract state has not been recovered for attack when the victim contract state has not been recovered. A typical reentry attack and a price manipulation attack both belong to a state manipulation attack. In the reentry attack, the attack contract calls the victim contract, and the victim contract has a code path that can call back the attack contract. If the victim contract calls the attack contract before completing all state updates, the attack contract uses this feature to re-enter the victim contract and manipulate some unauthorized state changes. In the price manipulation attack, the attack contract owns a large number of digital assets through a flash loan, exchanges a large amount of digital assets, and manipulates the price of a digital asset. At this time, the attack contract uses an abnormal price calculation mechanism to seek illegitimate interests.

The existing attack smart contracts and normal smart contracts on the blockchain are collected as a data set. For the state manipulation attack contracts, the security events of smart contracts that have occurred in history are analyzed, and the state manipulation attack contracts are collected. For normal contracts, the smart contracts on the blockchain are acquired by communicating with a blockchain node through a remote procedure call, and all the smart contracts verified by a source code on the blockchain are considered as normal contracts.

S2, a creator of a target smart contract is positioned, transaction call information on the day before a contract is created is acquired, and a historical external transaction graph is constructed.

S2.1, an Application Programming Interface (API) of an official blockchain browser is used to acquire all the transaction information of a smart contract creator on the day before the smart contract is created.

S2.2, the transaction information is processed. Each transaction in the blockchain contains a function signature. The transaction type can be judged by each function signature. If the function signature in the transaction is empty, it means that the transaction is a transfer transaction between accounts, and the interaction between smart contracts is not involved. The function signatures of smart contract creation transactions are usually fixed values, and all the function signatures of smart contract creation transactions are collected to obtain a function signature database of smart contract creation transactions. If the function signature of a transaction is in a database, the transaction is the smart contract creation transaction, and other normal 8-bit hexadecimal function signatures are the contract function calls.

S2.3, if the transaction is a transfer transaction and a smart contract creation transaction, a caller address and a callee address in the transaction information are taken as a starting point and an ending point of the transaction, and the transaction information is taken as an edge.

S2.4, if the transaction is a contract function call transaction, a caller address in the transaction information is taken as a starting point of the transaction, the combination of a callee address of the transaction information and the called function signature is taken as an ending point of the transaction, and the transaction information is taken as an edge.

Specifically, the official call interface of a blockchain browser is used to construct historical external callers of all smart contract creators in the data set. The smart contract address is input into the contract module of the call interface of the blockchain browser. The creator address of the smart contract and a creation contract transaction hash are obtained through the operation of "acquiring the contract creation behavior". The creation contract transaction hash is input. A relevant information dictionary of the transaction is obtained by using the command of "acquiring a transaction" called by a remote procedure. The field of "the number of blocks" of the transaction is the creation block of the smart contract. The smart contract address is input into the module of "account". Through the operation of "a transaction list", the historical transactions of the smart contract creator are obtained, and a starting block and an ending block of the transactions are restricted. The ending block is set as the creation block of an initial smart contract, and the starting block is set as the number of blocks on the day before the initial smart contract is created. All the transaction information of the creator of the initial smart contract on the day before the initial smart contract is created is acquired.

Each transaction in the blockchain contains a function signature. The transaction type can be judged by each function signature. The transaction information is processed. If the function signature in the transaction is empty, the transaction is a transfer transaction between accounts. If a specific signature of the smart contract creation transaction, the transaction is the smart contract creation transaction, and other normal 8-bit hexadecimal function signatures are the contract function calls. If the transaction is a transfer transaction and a smart contract creation transaction, a caller address and a callee address in the transaction information are taken as a starting point and an ending point of the transaction, and the transaction information of transfer and contract creation is taken as an edge. If the transaction is a contract function call transaction, a caller address in the transaction information is taken as a starting point of the transaction, the combination of a callee address of the transaction information and the called function signature is taken as an ending point of the transaction, and the call information of the contract function is taken as an edge. The historical external transaction graph of the smart contract creator is constructed.

S3, the target smart contract is decompiled, an external call relationship is recursively extracted, and an external call behavior graph is constructed.

The smart contract is decompiled. The external call relationship in the smart contract is extracted, that is, the called smart contract and the target function. Moreover, all the called contracts are deeply traversed. The external call relationship in the target function is recursively extracted. The external call behavior graph of the smart contract is constructed.

S3.1, the smart contract is decompiled to acquire an opcode sequence of the smart contract, a function call opcode in the opcode sequence is hooked, and functions with common attributes in the smart contract are deeply traversed.

S3.2, if there is an external contract call in the function, an external call contract address and a called function signature are recovered.

S3.3, a bytecode of a called contract is acquired through a call interface of a web3 library, and external call analysis is recursively performed.

S3.4, taking a contract address and a corresponding function signature as nodes of a call graph, and taking a call behavior as an edge, the external call behavior graph of the smart contract is constructed.

Specifically, the smart contract address is input, and the bytecode of the smart contract is obtained through the command of "acquiring a code" in the remote procedure call. The smart contract is decompiled by using the advanced smart contract decompiler Gigahorse. All functions with common attributes in the smart contract are deeply traversed. If there is an external contract call in the function, the externally called contract address and the called function signature are recovered.

There are three main methods for recovering the external call contract address. In a first method, the external call information is hard-coded in the smart contract, and the corresponding external call information can be directly extracted through a regular expression. In a second method, the external call information is in the contract storage, and the access location of the contract storage is determined by two parameters: the storage slot number and the offset. After the corresponding external call is identified, data flow analysis is performed to judge whether there is an accessible path between the external call information and the contract storage related instruction. If there is a data flow path, the storage slot number and the offset in the contract storage instruction are recorded, and finally, the corresponding contract storage content is obtained through the command of "acquiring the state storage" in the remote procedure call. In a third method, the external call information comes from the function parameters. All the function parameters with known parameter values are collected, and a call point is used to identify the external call to which the known parameter belongs. When recovering the external call information, the call point is matched with the collected known parameters, and the matched parameter values are passed to the called function.

After successfully recovering the external call contract address and the called function signature, the bytecode of the called contract is obtained through the remote procedure call. The smart contract is decompiled. In a similar manner, the external contract call is analyzed recursively. After analyzing the smart contract external call, the external call behavior graph of the smart contract is constructed with the sub-address of the contract and the corresponding function signature as nodes of the call graph and with the function call behavior as an edge.

S4, the historical external transaction graph is combined with the external call behavior graph, repeated nodes are merged, and a creation behavior graph of a smart contract is constructed.

The historical external transaction graph of the smart contract creator is combined with the external call behavior graph of the smart contract, repeated nodes are induced and merged, and the creation behavior graph of the smart contract is constructed.

There are two classes of nodes in the creation behavior graph of the smart contract: a class of nodes are the nodes identified by the account address, which may be an ordinary account or a smart contract; and the other class of nodes are the nodes identified by the combination of the smart contract address and the corresponding function signature. There are three types of directed edges between nodes: a first type of directed edges are the directed edges that identify the creation contract, a second type of directed edges are the directed edges that identify transfer between nodes, and a third type of directed edges are the directed edges that identify the function call in the contract.

The historical external transaction graph of the smart contract creator is combined with the external call behavior graph of the smart contract. The smart contract creator is taken as the starting point, and the initial smart contract is taken as the ending point. A directed edge is added, and the type of the directed edge is the creation contract behavior. The creation behavior graph of the smart contract is constructed. If there are the same node identifiers in the process of constructing the creation behavior graph of the smart contract, the corresponding nodes are merged, and the relationship between directed edges remains unchanged.

S5, the creation behavior graph is input into a graph attention neural network model for training, and a classifier of a state manipulation attack is constructed.

S5.1, taking the creation behavior graph of the smart contract as an input, a graph neural network based on a graph attention mechanism is constructed, and a rectified linear unit is used as an activation function, in which a feature aggregation formula of node i is expressed as: $\vec{{h}_{i}} ′ = σ \left({\sum }_{j ∈ {N}_{i}} {α}_{i , j} W \vec{{h}_{j}}\right)$ where h̅ᵢ̅' denotes a feature vector of the aggregated node i, σ denotes an activation function, Nᵢ denotes an adjacent node of the node i, α_{i,j} denotes an attention coefficient of a self-attention mechanism between the node i and the node j, and W denotes a learning weight matrix.

The feature representation of the graph is obtained by aggregating node features using an average pooling method, which is: $M = Mean \left({\sum }_{k ∈ N} \vec{{h}_{k}}\right)$ where M denotes a graph feature after average pooling aggregation, N denotes all nodes in the graph, and h̅ₖ̅ denotes the feature representation of node k.

S5.2, the global feature representation of the graph is output to a dropout layer and a fully connected layer to obtain a prediction class label of the graph.

A graph neural network model is constructed to achieve a graph classification task, and a calculating process is performed on the smart contract in the data set in Step 2 to Step 4 to obtain the creation behavior graph of the smart contract, which is input as a graph. The node features in the graph are encoded by using a bag-of-words model, in which the graph attention network is taken as the main component of the neural network. The graph attention network performs feature aggregation of nodes based on a self-attention mechanism. That is, the weights between nodes and edges are calculated through a learnable weight matrix, so that each node can be weighted and aggregated according to the features of its surrounding nodes. The attention coefficient α_{i,j} of the self-attention mechanism between node i and node j is calculated as follows: ${α}_{i , j} = \frac{exp \left({e}_{i , j}\right)}{{\sum }_{k ∈ {N}_{i}} exp \left({e}_{i , k}\right)}$ where e_{i,j} denotes an attention score, which represents the importance of the feature of node j to node i, and Nᵢ denotes the set of nodes adjacent to node i. e_{i,j} is obtained by connecting the feature vectors of node i and node j in series and performing linear transformation: ${e}_{ij} = LeakyReLU \left({\vec{a}}^{T}\left[\left.W\vec{{h}_{j}}\right|\left|W\vec{{h}_{j}}\right.\right]\right)$ where LeakyReLU denotes an activation function, a̅ denotes a weight vector, ∥ denotes the serial operation, and h̅ⱼ̅ denotes a feature vector of node i, which is obtained by calculating the attention coefficient between node i and the adjacent node.

A two-layer graph attention network is arranged, and nonlinear transformation is performed on the node features in the middle of the graph attention network by using a rectified linear unit, so as to better deal with the nonlinear relationship of data. The node features are aggregated by using an average pooling method to obtain the overall feature representation of creation behavior graph of the smart contract. Thereafter, a classifier is designed, where the classifier contains a dropout layer and a fully connected layer. The dropout layer randomly sets a part of the neuron output to 0, which helps to prevent overfitting and improve the generalization ability of the model. The fully connected layer learns the nonlinear combination of input data features, so that the model makes more accurate prediction. The collected data set is trained to obtain a classifier for detecting a smart contract state manipulation attack.

As shown in FIG. 2, this is a model structure of a state manipulation attack detector based on a graph neural network according to the present disclosure.

S6, a smart contract created in real time is monitored, the creation behavior graph is constructed and the creation behavior graph is input into the classifier to detect the state manipulation attack in real time.

S6.1, the created smart contract in real time is monitored through a remote procedure call, and the bytecode of the smart contract is saved.

S6.2, Step S2 to Step S4 are used to construct a creation behavior graph of the smart contract.

S6.3, the creation behavior graph of the smart contract is input into the classifier of the graph neural network to detect a corresponding smart contract state manipulation attack.

Specifically, all nodes of a synchronous blockchain are connected and communicate with the blockchain node through the remote procedure call protocol. In an advanced programming language Python or JavaScript, requests can be sent to the blockchain node through a corresponding function. The transaction information of the block released on the blockchain in real time is analyzed. A transaction is created for the smart contract. The smart contract address is acquired. Step S2 to Step S4 are used to construct the creation behavior graph of the smart contract, and the creation behavior graph is input into the classifier of the state manipulation attack in Step S5 to obtain a suspicious attack contract, thereby effectively achieving the early warning of the state manipulation attack.

With reference to FIG. 3, Embodiment 2 is a second embodiment of the present disclosure, and provides a method for detecting a smart contract state manipulation attack based on a graph neural network. In order to verify the beneficial effects of the present disclosure, scientific demonstration is conducted through experiments.

EGD Finance is an attack event that occurred in August 2022, which achieves illegal attacks through state manipulation. Reward calculation (rew) in the vulnerability code can be obtained by calculating the number of tokens in a liquidity pool. Attackers borrow a large number of corresponding assets through flash loans, manipulate the number of tokens in the liquidity pool, and call reward calculation through callback functions to achieve malicious attacks.

Using the method in the present disclosure, the attack event is analyzed, the deployer of the attack smart contract is positioned, and the external transaction behavior graph of the deployer is constructed; and thereafter, the code of the attack smart contract is decompiled, the external call relationship of the smart contract is extracted by data flow analysis, and the external call graph of the smart contract is recursively constructed. The external transaction behavior graph is combined with the external call graph to construct the creation behavior graph of the smart contract. A simplified schematic diagram is shown in FIG. 3.

Given an attack smart contract, the historical transaction information of the creator address is obtained, and it is found that there are only two historical transactions, that is, the contract creation transaction T0 and the Stake transaction. These two transactions are analyzed, the external transaction graph of the smart contract is constructed, and then the code of the attack contract is analyzed, that is, the current function call of Harvest transaction for the reward calculation. The external call relationship of the smart contract is extracted, and the function call relationship between the smart contract and the flash loan contract and the victim contract is constructed to obtain the external call behavior graph of the smart contract. Feature encoding is performed on the function call in each edge. Finally, the state manipulation attack is detected by using the constructed graph attention neural network.

Embodiment 3, which is a third embodiment of the present disclosure, is different from the first two embodiments in the following aspects.

The functions can be stored in a computer-readable storage medium if the functions are achieved in the form of software function units and sold or used as independent products. Based on this understanding, essentially, the part of the technical solution of the present disclosure that contributes to the prior art, or a part of the technical solution itself, can be embodied in the form of a software product. The computer software product is stored in a storage medium and includes several instructions to cause a computer device (which may be a personal computer, a server, a network device, and the like) to execute all or part of the steps of the method described in various embodiments of the present disclosure. The aforementioned storage medium includes various media that can store program codes such as: a USB flash drive, a mobile hard disk, a Read-Only Memory (ROM), a Random Access Memory (RAM), a magnetic disk, or an optical disk.

The logic and/or steps represented in the flowchart or described in other manners herein, for example, can be regarded as a sequenced list of executable instructions for achieving logical functions, and can be embodied in any computer-readable medium for use by or in combination with an instruction execution system, apparatus or device (such as a computer-based system, a system including a processor, or other systems that can fetch and execute instructions from the instruction execution system, apparatus or device). For the purposes of this specification, a "computer-readable medium" can be any apparatus that can contain, store, communicate, propagate or transmit a program for use by or in connection with an instruction execution system, apparatus or device.

A more specific example (a non-exhaustive list) of the computer-readable medium includes: an electrical connection part (an electronic device) with one or more wires, a portable computer disk box (a magnetic device), a Random Access Memory (RAM), a Read-Only Memory (ROM), an Erasable Programmable Read-Only Memory (EPROM or a flash memory), an optical fiber device, and a portable Compact Disk Read-Only Memory (CD-ROM). In addition, the computer-readable medium may even be paper or other suitable media on which the program can be printed, because the program can be obtained electronically by, for example, optically scanning the paper or other media, and then editing, interpreting or processing the paper or other media in other suitable manners if necessary, and then can be stored in a computer memory.

It should be understood that various parts of the present disclosure can be implemented by hardware, software, firmware or a combination thereof. In the above embodiments, a plurality of steps or methods can be achieved by software or firmware stored in a memory and executed by an appropriate instruction execution system. For example, if the steps or methods are achieved by hardware, as in another embodiment, the steps or methods can be achieved by a combination of any of the following technologies known in the art: a discrete logic circuit with a logic gate for achieving a logic function on a data signal, an application specific integrated circuit with a suitable combinational logic gate, a Programmable Gate Array (PGA), a Field Programmable Gate Array (FPGA), and the like.

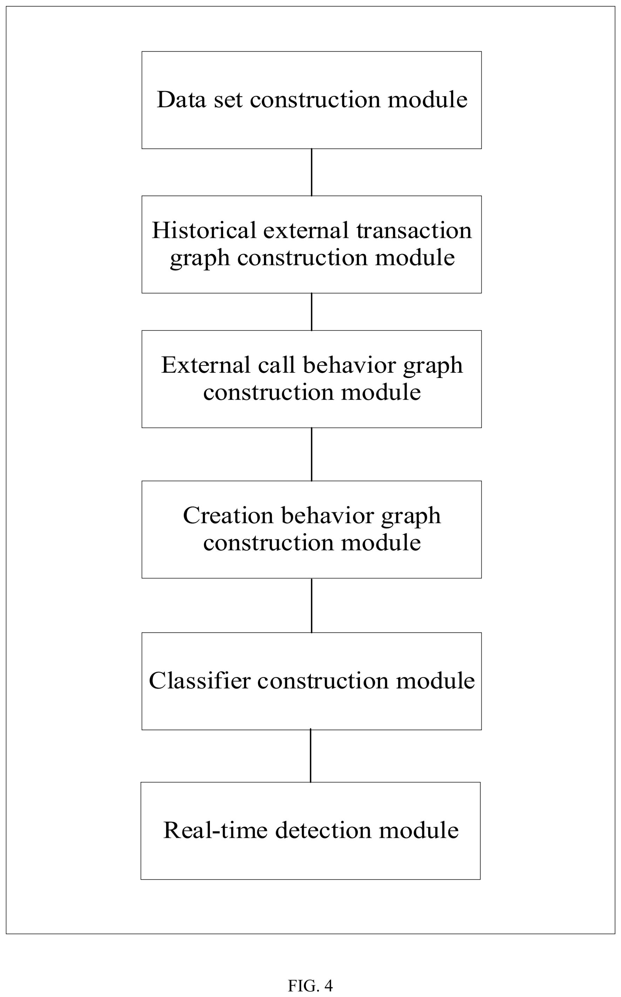

With reference to FIG. 4, Embodiment 4 is a fourth embodiment of the present disclosure. This embodiment provides a system for detecting a smart contract state manipulation attack based on a graph neural network, which includes a data set construction module, a historical external transaction graph construction module, an external call behavior graph construction module, a creation behavior graph construction module, a classifier construction module, and a real-time detection module.

The data set construction module is configured to define the type of the smart contract state manipulation attack, collect attack smart contracts and normal smart contracts on a blockchain, and construct a training data set.

The historical external transaction graph construction module is configured to position a creator of a target smart contract, acquire transaction call information on the day before a contract is created, and construct a historical external transaction graph.

The external call behavior graph construction module is configured to decompile the target smart contract, recursively extract an external call relationship, and construct an external call behavior graph.

The creation behavior graph construction module is configured to combine the historical external transaction graph with the external call behavior graph, merge repeated nodes, and construct a creation behavior graph of a smart contract.

The classifier construction module is configured to input the creation behavior graph into a graph attention neural network model for training, and construct a classifier of a state manipulation attack.

The real-time detection module is configured to monitor a smart contract created in real time, construct the creation behavior graph, and input the creation behavior graph into the classifier to detect the state manipulation attack in real time.

It should be noted that the above embodiments are only used to illustrate the technical solution of the present disclosure, rather than limit the technical solution. Although the present disclosure has been described in detail with reference to the preferred embodiments, those skilled in the art should understand that the technical solution of the present disclosure can be modified or replaced by equivalents without departing from the spirit and scope of the technical solution, which should be included in the scope of the claims of the present disclosure.

## Claims

1. A method for detecting a smart contract state manipulation attack based on a graph neural network, comprising:
defining the type of the smart contract state manipulation attack, collecting attack smart contracts and normal smart contracts on a blockchain, and constructing a training data set;
positioning a creator of a target smart contract, acquiring transaction call information on the day before a contract is created, and constructing a historical external transaction graph;
decompiling the target smart contract, recursively extracting an external call relationship, and constructing an external call behavior graph;
combining the historical external transaction graph with the external call behavior graph, merging repeated nodes, and constructing a creation behavior graph of a smart contract;
inputting the creation behavior graph into a graph attention neural network model for training, and constructing a classifier of a state manipulation attack; and
monitoring a smart contract created in real time, constructing the creation behavior graph, and inputting the creation behavior graph into the classifier to detect the state manipulation attack in real time.

2. The method for detecting the smart contract state manipulation attack based on the graph neural network according to claim 1, wherein the smart contract state manipulation attack comprises an attacker first calling a function in a victim contract to affect the state of key variables in the victim contract, and then the attacker calling a victim function which has defects because the state has not been recovered when the victim contract state has not been recovered.

3. The method for detecting the smart contract state manipulation attack based on the graph neural network according to claim 2, wherein the step of acquiring transaction call information on the day before a contract is created and constructing a historical external transaction graph comprises:
using an Application Programming Interface (API) of a blockchain browser to acquire all the transaction information of a smart contract creator on the day before the smart contract is created;
processing the transaction information, and judging a transaction type according to a function signature in each transaction, in which the transaction is a transfer transaction if the function signature is empty, the transaction is a contract creation transaction if the function signature is the function signature of a smart contract creation transaction in a preset database, and other transactions are contract function call transactions;
if the transaction is a transfer transaction or a smart contract creation transaction, taking a caller address and a callee address as a starting point and an ending point of an edge in the graph; and
if the transaction is a contract function call transaction, taking a caller address and a callee address in the transaction information as a starting point and an ending point of the transaction, and taking the transaction information as the edge, constructing the historical external transaction graph of the smart contract creator.

4. The method for detecting the smart contract state manipulation attack based on the graph neural network according to claim 3, wherein the step of decompiling the target smart contract, recursively extracting an external call relationship, and constructing an external call behavior graph comprises:
decompiling the smart contract to acquire an opcode sequence of the smart contract, hooking a function call opcode in the opcode sequence, and deeply traversing functions with common attributes in the smart contract;
if there is an external contract call in the function, recovering an external call contract address and a called function signature;
acquiring a bytecode of a called contract through a call interface of a web3 library, and recursively performing external call analysis; and
taking a contract address and a corresponding function signature as nodes of a call graph, and taking a call behavior as an edge, constructing the external call behavior graph of the smart contract.

5. The method for detecting the smart contract state manipulation attack based on the graph neural network according to claim 4, wherein the step of constructing a creation behavior graph of a smart contract comprises:
combining the historical external transaction graph of the smart contract creator with the external call behavior graph of the smart contract, inducing and merging repeated nodes, and constructing the creation behavior graph of the smart contract.

6. The method for detecting the smart contract state manipulation attack based on the graph neural network according to claim 4, wherein the step of inputting the creation behavior graph into a graph attention neural network model for training, and constructing a classifier of a state manipulation attack comprises:
taking the creation behavior graph of the smart contract as an input, constructing a graph neural network based on a graph attention mechanism, and using a rectified linear unit as an activation function, in which a feature aggregation formula of node i is expressed as: $\vec{{h}_{i}} ′ = σ \left({\sum }_{j ∈ {N}_{i}} {α}_{i , j} W \vec{{h}_{j}}\right)$
where h̅ᵢ̅' denotes a feature vector of the aggregated node i, σ denotes an activation function, Nᵢ denotes an adjacent node of the node i, α_{i,j} denotes an attention coefficient of a self-attention mechanism between the node i and the node j, and W denotes a learning weight matrix;
obtaining the feature representation of the graph by aggregating node features using an average pooling method, which is: $M = Mean \left({\sum }_{k ∈ N} \vec{{h}_{k}}\right)$
where M denotes a graph feature after average pooling aggregation, N denotes all nodes in the graph, and h̅ₖ̅ denotes the feature representation of node k; and
outputting the global feature representation of the graph to a dropout layer and a fully connected layer to obtain a prediction class label of the graph.

7. The method for detecting the smart contract state manipulation attack based on the graph neural network according to claim 4, wherein the step of monitoring a smart contract created in real time, constructing the creation behavior graph, and inputting the creation behavior graph into the classifier to detect the state manipulation attack in real time comprises:
monitoring the created smart contract in real time through a remote procedure call, and saving the bytecode of the smart contract;
constructing a creation behavior graph of the smart contract; and
inputting the creation behavior graph of the smart contract into the classifier to detect a corresponding smart contract state manipulation attack.

8. A system for detecting a smart contract state manipulation attack based on a graph neural network, applying the method for detecting the smart contract state manipulation attack based on the graph neural network according to any one of claims 1 to 7, wherein the system comprises a data set construction module, a historical external transaction graph construction module, an external call behavior graph construction module, a creation behavior graph construction module, a classifier construction module, and a real-time detection module;
the data set construction module is configured to define the type of the smart contract state manipulation attack, collect attack smart contracts and normal smart contracts on a blockchain, and construct a training data set;
the historical external transaction graph construction module is configured to position a creator of a target smart contract, acquire transaction call information on the day before a contract is created, and construct a historical external transaction graph;
the external call behavior graph construction module is configured to decompile the target smart contract, recursively extract an external call relationship, and construct an external call behavior graph;
the creation behavior graph construction module is configured to combine the historical external transaction graph with the external call behavior graph, merge repeated nodes, and construct a creation behavior graph of a smart contract;
the classifier construction module is configured to input the creation behavior graph into a graph attention neural network model for training, and construct a classifier of a state manipulation attack; and
the real-time detection module is configured to monitor a smart contract created in real time, construct the creation behavior graph, and input the creation behavior graph into the classifier to detect the state manipulation attack in real time.

9. A computer device, comprising a memory and a processor, wherein the memory stores a computer program, and the processor, when executing the computer program, implements the steps of the method for detecting the smart contract state manipulation attack based on the graph neural network according to any one of claims 1 to 7.

10. A computer-readable storage medium on which a computer program is stored, wherein the computer program, when executed by a processor, implements the steps of the method for detecting the smart contract state manipulation attack based on the graph neural network according to any one of claims 1 to 7.
